# EUROPEAN PATENT APPLICATION

(11) **EP 3 927 014 A1**
(43) Date of publication of application: **22.12.2021**
(21) Application number: 20756277.8
(22) Date of filing: 13.02.2020
(51) Int. Cl.: H04W 28/26

(54) **AUXILIARY INFORMATION REPORTING METHOD AND APPARATUS, AND COMMUNICATION DEVICE**

(30) Priority: 13.02.2019 CN 201910116797
(71) Applicant: VIVO MOBILE COMMUNICATION CO., LTD., Dongguan, Guangdong 523860 (CN)
(72) Inventor: ZHANG, Yanxia, Dongguan, Guangdong 523860 (CN); WU, Yumin, Dongguan, Guangdong 523860 (CN)
(74) Representative: Winter, Brandl - Partnerschaft mbB
(86) International application number: PCT/CN2020/075023
(87) International publication number: WO 2020/164534

(57) **Abstract**

This disclosure provides a method for reporting assistance information, an apparatus for reporting assistance information, and a communications device. The method for reporting assistance information is applied to user equipment and includes: reporting semi-persistent resource assistance information corresponding to a periodic data flow to a network-side device, where the semi-persistent resource assistance information is used by the network-side device to reserve a semi-persistent resource for the periodic data flow.

## Description

### CROSS-REFERENCE TO RELATED APPLICATIONS

This application claims priority to Chinese Patent Application No. 201910116797.4, filed in China on February 13, 2019, which is incorporated herein by reference in its entirety.

### TECHNICAL FIELD

This disclosure relates to the field of wireless communications technologies, and in particular, to a method for reporting assistance information, an apparatus for reporting assistance information, and a communications device.

### BACKGROUND

A semi-persistent scheduling mode is usually used for periodic service data on a radio access network (Radio Access Network, RAN) side. However, if a configured semi-persistent resource does not correspond to an actual arrival time of the periodic service data, a service requirement of a delay-sensitive service may not be met as a result. In the related art, there is still no solution to assist a network side in reserving an appropriate semi-persistent resource for periodic service data.

### SUMMARY

The technical problem to be resolved in this disclosure is how to assist a network side in reserving an appropriate semi-persistent resource for periodic service data.

To resolve the technical problem, embodiments of this disclosure use the following technical solutions:

According to a first aspect, an embodiment of this disclosure provides a method for reporting assistance information, applied to user equipment and including:
reporting semi-persistent resource assistance information corresponding to a periodic data flow to a network-side device, where the semi-persistent resource assistance information is used by the network-side device to reserve a semi-persistent resource for the periodic data flow.

According to a second aspect, an embodiment of this disclosure further provides a method for reporting assistance information, applied to a network-side device and including:
obtaining semi-persistent resource assistance information corresponding to a periodic data flow and reported by user equipment; and
reserving a semi-persistent resource for the periodic data flow according to the semi-persistent resource assistance information.

According to a third aspect, an embodiment of this disclosure provides an apparatus for reporting assistance information, applied to user equipment and including:
a transmitting module, configured to report semi-persistent resource assistance information corresponding to a periodic data flow to a network-side device, where the semi-persistent resource assistance information is used by the network-side device to reserve a semi-persistent resource for the periodic data flow.

According to a fourth aspect, an embodiment of this disclosure provides an apparatus for reporting assistance information, applied to a network-side device and including:
an obtaining module, configured to obtain semi-persistent resource assistance information corresponding to a periodic data flow and reported by user equipment; and
a processing module, configured to reserve a semi-persistent resource for the periodic data flow according to the semi-persistent resource assistance information.

According to a fifth aspect, an embodiment of this disclosure provides a communications device, including a memory, a processor, and a computer program stored in the memory and capable of running on the processor, where when the computer program is executed by the processor, the steps of the foregoing method for reporting assistance information are implemented.

According to a sixth aspect, an embodiment of this disclosure provides a computer-readable storage medium, where the computer-readable storage medium stores a computer program, and when the computer program is executed by a processor, the steps of the foregoing method for reporting assistance information are implemented.

The embodiments of this disclosure have the following beneficial effects:

In the foregoing solutions, the user equipment may report the semi-persistent resource assistance information corresponding to the periodic data flow to the network-side device, so that the network-side device responsible for configuring a semi-persistent resource can obtain the semi-persistent resource assistance information corresponding to the periodic data flow, and can reserve an appropriate semi-persistent resource for the periodic data flow according to the semi-persistent resource assistance information, thereby ensuring communication reliability of the periodic data flow.

### BRIEF DESCRIPTION OF DRAWINGS

FIG. 1 is a schematic flowchart of a method for reporting assistance information applied to user equipment according to an embodiment of this disclosure;
FIG. 2 is a schematic flowchart of a method for reporting assistance information applied to a network-side device according to an embodiment of this disclosure;
FIG. 3 is a schematic diagram of a start position of periodic data transmission according to an embodiment of this disclosure;
FIG. 4 is a structural block diagram of an apparatus for reporting assistance information applied to user equipment according to an embodiment of this disclosure;
FIG. 5 is a structural block diagram of an apparatus for reporting assistance information applied to a network-side device according to an embodiment of this disclosure;
FIG. 6 is a schematic diagram of composition of user equipment according to an embodiment of this disclosure; and
FIG. 7 is a schematic diagram of composition of a network-side device according to an embodiment of this disclosure.

### DESCRIPTION OF EMBODIMENTS

To make the to-be-resolved technical problems, technical solutions, and advantages of the embodiments of this disclosure clearer, the following provides detailed descriptions with reference to the accompanying drawings and specific embodiments.

In the industrial Internet, network transmission resources are shared, which means that any device in the network can use the network resources to transmit data, and therefore data transmission is neither accurate nor certain in time. In actual applications, there is time-sensitive data, such as a robot command, which needs to be completed in order within a specified time period. To ensure transmission of such time-sensitive data, a time sensitive network (time sensitive network, TSN) is proposed. The time-sensitive network refers to a set of sub-standards developed by the TSN task group of the Institute of Electrical and Electronic Engineers (Institute of Electrical and Electronic Engineers, IEEE) 802.1 working group based on specific application requirements, aiming to establish a universal time-sensitive mechanism for Ethernet protocols to determine time accuracy of network data transmission.

In an industrial environment, most applications need to transmit data periodically. The time-sensitive network can reserve periodic transmission resources in advance for such time-sensitive data flows. In this way, in each transmission period, even if there is no time-sensitive data flows, network resources reserved for the time-sensitive data flows cannot be occupied by other data flows. When a time-sensitive data flow arrives, a dedicated resource is occupied for transmission.

Many applications (for example, manufacturing and automation control) in the industrial environment have high performance requirements, such as low latency, high reliability, and directional information transmission. In a local network, as device density increases, these performance requirements are difficult to meet. In some scenarios (for example, in a case that a device is a mobile device), wireless links may be used to replace wired links in the related art, that is, using a fifth generation (5th generation, 5G) communications network to provide a local area network (Local Area Network, LAN)-type private communication service for such a vertical industry to meet communication needs of the vertical industry.

For periodic data transmission requirements of most applications in the industrial environment, for example, information needs to be periodically transmitted to a specified device, to make the device perform a specified operation, a 5G communications system needs to support transmission of such periodic data flows to meet its requirements such as delay and reduce 5G system overheads.

A semi-persistent scheduling mode is usually used for periodic service data on a radio access network (Radio Access Network, RAN) side. However, if a configured semi-persistent resource does not correspond to an actual arrival time of the periodic service data, a service requirement of a delay-sensitive service cannot be met as a result. When the time sensitive network (Time sensitive network, TSN) interacts with a wireless communications network (for example, a 5G network), user equipment (User Equipment, UE) serves as a device connecting the TSN and the wireless communications network, and needs to carry one or more data flows from an external device. In the related art, there is still no related solution to how and when the UE reports periodic data flow information.

To resolve the foregoing problems, the embodiments of this disclosure provide a method for reporting assistance information, an apparatus for reporting assistance information, and a communications device, so as to assist a network side in reserving an appropriate semi-persistent resource.

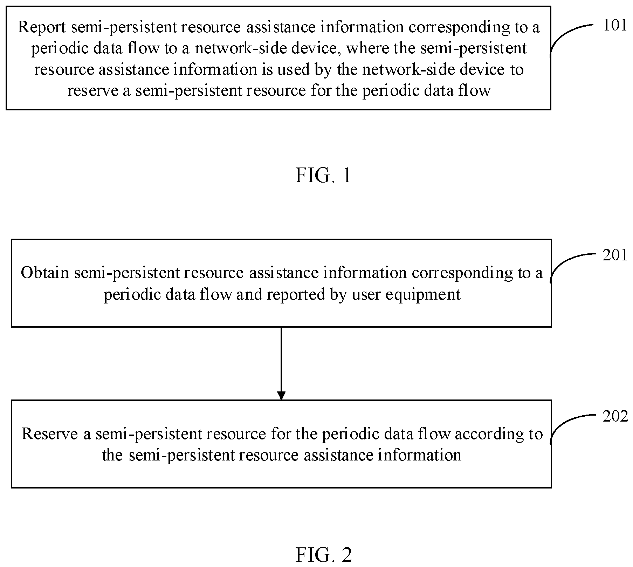

An embodiment of this disclosure provides a method for reporting assistance information, applied to user equipment and, as shown in FIG. 1, including the following step:

Step 101: Report semi-persistent resource assistance information corresponding to a periodic data flow to a network-side device, where the semi-persistent resource assistance information is used by the network-side device to reserve a semi-persistent resource for the periodic data flow.

In this embodiment, the user equipment may report the semi-persistent resource assistance information corresponding to the periodic data flow to the network-side device, so that the network-side device responsible for configuring a semi-persistent resource can obtain the semi-persistent resource assistance information corresponding to the periodic data flow, and can reserve an appropriate semi-persistent resource for the periodic data flow according to the semi-persistent resource assistance information, thereby reducing signaling overheads caused by dynamic scheduling and transmission of the data flow and ensuring communication reliability of the periodic data flow.

The user equipment may determine when to report the semi-persistent resource assistance information corresponding to the periodic data flow to the network-side device, or may report the semi-persistent resource assistance information corresponding to the periodic data flow to the network-side device after a specified reporting condition is met.

In a specific embodiment, before the reporting semi-persistent resource assistance information corresponding to a periodic data flow to a network-side device, the method further includes:
determining whether a specified reporting condition is met; and
the reporting semi-persistent resource assistance information corresponding to a periodic data flow to a network-side device specifically includes:
   if a specified reporting condition is met, reporting the semi-persistent resource assistance information to the network-side device.

Further, the specified reporting condition is determined by a configuration message transmitted by the network-side device, and before the reporting semi-persistent resource assistance information corresponding to a periodic data flow to a network-side device, the method further includes:
receiving a configuration message from the network-side device, where the configuration message includes at least one of the following:
a trigger condition for reporting assistance information;
indication information for assistance information reporting; or
a timer for assistance information reporting.

In a specific embodiment, the specified reporting condition may be:
the indication information for assistance information reporting indicates reporting assistance information, the trigger condition is met, and the network-side device has configured the timer for semi-persistent resource assistance information reporting but the timer for semi-persistent resource assistance information reporting is not running; or
the indication information for assistance information reporting indicates reporting assistance information, the trigger condition is met, and the network-side device has not configured the timer for semi-persistent resource assistance information reporting.

Further, the method further includes:
in a case that the network-side device has configured the timer for semi-persistent resource assistance information reporting and the timer for semi-persistent resource assistance information reporting is running, skipping reporting the semi-persistent resource assistance information corresponding to the periodic data flow to the network-side device.

Further, the trigger condition includes at least one of the following:
it is detected that a parameter corresponding to the periodic data flow has changed, where the parameter includes at least one of the following: a transmission periodicity of the periodic data flow, a size of data transmitted in each period, data transmission duration in each period, and a start time of periodic data transmission;
it is detected that the periodic data flow no longer needs to be transmitted through the user equipment, for example, a specified data flow of a specified external device no longer needs to be forwarded through the user equipment;
it is detected that a new periodic data flow needs to be transmitted through the user equipment, for example, a data flow of a newly added external device needs to be forwarded through the user equipment; or
a preset type of service is to be transmitted or is being transmitted, where the service of the preset type may be a service of interest pre-defined for the user equipment.

Further, the size of data transmitted in each period may be a data size of one data packet, or a total data size of a plurality of data packets. To be specific, if a plurality of data packets can be transmitted in one period, the size of data transmitted in each period may be represented by two parameters: a data size of one data packet and the number of data packets transmitted in one period. In addition, if a size of data transmitted by a transmit end changes in each period, the size of the data transmitted in each period is a size of largest data transmitted in the period.

Further, the indication information for assistance information reporting is one-bit indication information. For example, a value of " 1" means that the UE enables an assistance information reporting function, and a value of "0" indicates that the UE disables the assistance information reporting function. When the assistance information reporting function is enabled, the UE determines whether to trigger the UE to report the assistance information based on the trigger condition configured on a network side. Certainly, the indication information for assistance information reporting is not limited to the one-bit indication information, and the number of bits occupied by the indication information for assistance information reporting may be designed as required.

Further, the timer for semi-persistent resource assistance information reporting is set to be N consecutive system frames or subframes or slots or symbols or a preset time length, where N is a positive integer, and the preset time length may be expressed in milliseconds (ms), and certainly, the preset time length is not limited to this and may be designed as required.

Further, the semi-persistent resource assistance information includes semi-persistent resource assistance information corresponding to one or more periodic data flows, and each piece of semi-persistent resource assistance information includes at least one of the following:
identification information of a periodic data flow;
indication information for releasing a periodic data flow; or
parameter information corresponding to a periodic data flow.

Further, the identification information of a periodic data flow includes at least one of the following:
a protocol data unit (Protocol Data Unit, PDU) session identifier (PDU session ID);
a quality of service (Quality of Service, QoS) flow identifier (QOS Flow ID, QFI);
a data radio bearer identifier (Data Radio Bearer ID, DRB ID);
a logical channel identifier (Logical Channel ID, LCID);
a cell group identifier (Master Cell Group ID, MCG ID or Secondary Cell Group ID, SCG ID);
a serving cell identifier (cell ID);
a bandwidth part identifier (Bandwidth Part ID, BWP ID); or
a semi-persistent scheduling identifier (Semi-Persistent Scheduling index, SPS index).

Further, the indication information for releasing a periodic data flow is one-bit indication information, for example, a value of" 1" means that the UE requests the network side to release the semi-persistent resource configured for the periodic data flow. Certainly, the indication information for releasing a periodic data flow is not limited to the one-bit indication information, and the number of bits occupied by the indication information for releasing a periodic data flow may be designed as required.

Further, the parameter information corresponding to a periodic data flow includes a start time of the periodic data flow, and the start time is indicated in any one of the following manners:
indicated by an absolute time based on a system clock, for example, a specific time consisting of hour, minute, and second, where the system clock may be a 5G system clock or an external clock, such as a TSN clock; and
indicated by a preset reference position on a radio system frame structure, where the start time of the periodic data flow is a start boundary or an end boundary of the preset reference position.

Further, the preset reference position is indicated in at least one of the following manners:
a position number, where the position number is at least one of the following: a system frame number, a subframe number, a slot number, and an orthogonal frequency division multiplexing (Orthogonal Frequency Division Multiplexing, OFDM) symbol number;
flipping indication information, where the flipping indication information indicates the number of times of flipping the position number (for example, a system frame number, or a subframe number, or a slot number), and a value of the flipping indication information is any integer; or
indication information of a system frame position at which the semi-persistent resource assistance information is initially transmitted.

If the network side configures the assistance information reporting timer for the UE, after the reporting semi-persistent resource assistance information corresponding to a periodic data flow to a network-side device, the method further includes:
starting the timer for semi-persistent resource assistance information reporting; and
after a processing indication for a semi-persistent resource corresponding to the periodic data flow is received from the network-side device, stopping the timer for semi-persistent resource assistance information reporting. This can prevent the UE from frequently reporting the assistance information and waste communication resources.

An embodiment of this disclosure further provides a method for reporting assistance information, applied to a network-side device and, as shown in FIG.2, including the following steps:

Step 201: Obtain semi-persistent resource assistance information corresponding to a periodic data flow and reported by user equipment.

Step 202: Reserve a semi-persistent resource for the periodic data flow according to the semi-persistent resource assistance information.

In this embodiment, the user equipment may report the semi-persistent resource assistance information corresponding to the periodic data flow to the network-side device, so that the network-side device responsible for configuring a semi-persistent resource can obtain the semi-persistent resource assistance information corresponding to the periodic data flow, and can reserve an appropriate semi-persistent resource for the periodic data flow according to the semi-persistent resource assistance information, thereby reducing signaling overheads caused by dynamic scheduling and transmission of the data and ensuring communication reliability of the periodic data flow.

The foregoing network-side device is a RAN-side device such as a base station, or a core network device such as a session management function (Session Management Function, SMF) entity. If the user equipment reports, to a core network device, the semi-persistent resource assistance information corresponding to the periodic data flow, for example, during establishment of a QoS flow, the core network device may transmit received information to a RAN-side device, so that the RAN-side device can configure a semi-persistent resource for the user equipment.

The network-side device (for example, a 5G base station (gNB)) may directly receive the semi-persistent resource assistance information corresponding to the periodic data flow and reported by the user equipment, and reserve a semi-persistent resource for the periodic data flow based on the received assistance information. Alternatively, when a handover or secondary node change (secondary node change, SN change) occurs, another network-side device (a source base station or a source secondary node) may receive the semi-persistent resource assistance information corresponding to the periodic data flow and reported by the user equipment, and the another network-side device forwards, to the network-side device (a destination base station or a target secondary node), the semi-persistent resource assistance information corresponding to the periodic data flow, and the network-side device reserves a semi-persistent resource for the periodic data flow based on the received assistance information. It should be noted that the network-side device configuring the semi-persistent resource for the UE is the RAN-side device.

Further, the obtaining semi-persistent resource assistance information corresponding to a periodic data flow and reported by user equipment includes:
obtaining the semi-persistent resource assistance information corresponding to the periodic data flow and reported by the user equipment; or
receiving the semi-persistent resource assistance information that is corresponding to the periodic data flow, reported by the user equipment, and forwarded by the another network-side device.

Further, the method further includes:
transmitting a configuration message to the user equipment, where the configuration message includes at least one of the following:
a trigger condition for reporting assistance information;
indication information for assistance information reporting; or
a timer for assistance information reporting.

Further, the trigger condition includes at least one of the following:
it is detected that a parameter corresponding to the periodic data flow has changed, where the parameter includes at least one of the following: a transmission periodicity of the periodic data flow, a size of data transmitted in each period, data transmission duration in each period, and a start time of periodic data transmission;
it is detected that the periodic data flow no longer needs to be transmitted through the user equipment, for example, a specified data flow of a specified external device no longer needs to be forwarded through the user equipment;
it is detected that a new periodic data flow needs to be transmitted through the user equipment, for example, a data flow of a newly added external device needs to be forwarded through the user equipment; or
a preset type of service is to be transmitted or is being transmitted.

Further, the size of data transmitted in each period may be a data size of one data packet, or a total data size of a plurality of data packets. To be specific, if a plurality of data packets can be transmitted in one period, the size of data transmitted in each period may be represented by two parameters: a data size of one data packet and the number of data packets transmitted in one period. In addition, if a size of data transmitted by a transmit end changes in each period, the size of the data transmitted in each period is a size of largest data transmitted in the period.

Further, the indication information for assistance information reporting is one-bit indication information. For example, a value of " 1" means that the UE enables an assistance information reporting function, and a value of "0" indicates that the UE disables the assistance information reporting function. When the assistance information reporting function is enabled, the UE determines whether to trigger the UE to report the assistance information based on the trigger condition configured on a network side. Certainly, the indication information for assistance information reporting is not limited to the one-bit indication information, and the number of bits occupied by the indication information for assistance information reporting may be designed as required.

Further, the timer for semi-persistent resource assistance information reporting is set to be N consecutive system frames or subframes or slots or symbols or a preset time length, where N is a positive integer, and the preset time length may be expressed in milliseconds (ms), and certainly, the preset time length is not limited to this and may be designed as required.

Further, the semi-persistent resource assistance information includes semi-persistent resource assistance information corresponding to one or more periodic data flows, and each piece of semi-persistent resource assistance information includes at least one of the following:
identification information of a periodic data flow;
indication information for releasing a periodic data flow; or
parameter information corresponding to a periodic data flow.

Further, the identification information of a periodic data flow includes at least one of the following:
a protocol data unit PDU session identifier (PDU session ID);
a quality of service QoS flow identifier (QFI);
a data radio bearer identifier (DRB ID);
a logical channel identifier (LCID);
a cell group identifier (MCG ID or SCG ID);
a serving cell identifier (cell ID);
a bandwidth part identifier (BWP ID); or
a semi-persistent scheduling identifier (SPS index).

Further, the indication information for releasing a periodic data flow is one-bit indication information. For example, a value of " 1" means that the UE requests the network side to release the semi-persistent resource configured for the periodic data flow. Certainly, the indication information for releasing a periodic data flow is not limited to the one-bit indication information, and the number of bits occupied by the indication information for releasing a periodic data flow may be designed as required.

Further, the parameter information corresponding to a periodic data flow includes a start time of the periodic data flow, and the start time is indicated in any one of the following manners:
indicated by an absolute time based on a system clock, for example, a specific time consisting of hour, minute, and second, where the system clock may be a 5G system clock or an external clock, such as a TSN clock; and
indicated by a preset reference position on a radio system frame structure, where the start time of the periodic data flow is a start boundary or an end boundary of the preset reference position.

Further, the preset reference position is indicated in at least one of the following manners:
a position number, where the position number is at least one of the following: a system frame number, a subframe number, a slot number, and an orthogonal frequency division multiplexing OFDM symbol number;
flipping indication information, where the flipping indication information indicates the number of times of flipping the position number (for example, a system frame number, or a subframe number, or a slot number), and a value of the flipping indication information is any integer; or
indication information of a system frame position at which the semi-persistent resource assistance information is initially transmitted.

Further, the reserving a semi-persistent resource for the periodic data flow according to the semi-persistent resource assistance information includes at least one of the following:
in a case that the semi-persistent resource assistance information indicates that the user equipment requests to release a semi-persistent resource corresponding to the periodic data flow, releasing the semi-persistent resource corresponding to the periodic data flow;
for a periodic data flow for which no semi-persistent resource has been configured, configuring a semi-persistent resource corresponding to the periodic data flow for the user equipment; or
for a periodic data flow for which a semi-persistent resource has been configured, reconfiguring or reactivating a semi-persistent resource corresponding to the periodic data flow for the user equipment according to the semi-persistent resource assistance information.

The following further describes the method for reporting assistance information of this disclosure in combination with specific embodiments by using an example in which the user equipment does not report the semi-persistent resource assistance information corresponding to the periodic data flow to the network-side device before the reporting conditions set by the network side are met.

The method for reporting assistance information in this embodiment includes the following steps:

Step 1. A network-side device on a RAN side transmits a configuration message of semi-persistent resource assistance information to UE, where the configuration message of the semi-persistent resource assistance information includes a combination of one or more of the following information:
a trigger condition for reporting assistance information;
indication information for assistance information reporting; or
a timer for assistance information reporting.

The trigger condition for reporting assistance information includes a combination of one or more of the following:
if it is detected that any parameter corresponding to the periodic data flow has changed, the UE is triggered to report the assistance information, where the parameter may be a transmission periodicity of the periodic data flow, a size of data transmitted in each period, data transmission duration in each period, and a start time of periodic data transmission;
if it is detected that the periodic data flow no longer needs to be transmitted through the UE, the UE is triggered to report the assistance information (if a specified external device is removed, a specified data flow of the device no longer needs to be forwarded through the UE);
if it is detected that a new periodic data flow needs to be transmitted by the UE, the UE is triggered to report the assistance information (if a new external device is deployed, a data flow of the newly added external device needs to be forwarded by the UE); and
if a service that the UE is interested in is to be transmitted or is being transmitted, the UE is triggered to report the assistance information.

The indication information for assistance information reporting may be one-bit indication information. For example, a value of "1" means that the UE enables an assistance information reporting function, and a value of "0" indicates that the UE disables the assistance information reporting function. When the function is enabled, the UE determines whether to trigger the UE to report the assistance information based on the trigger condition configured on the network side.

The assistance information reporting timer may be defined as N consecutive system frames or subframes or slots or symbols, or absolute duration.

The configuration message of the semi-persistent resource assistance information may be forwarded by a source base station to a target base station in a handover scenario, or may be forwarded by a source SN to a target SN in a secondary node (Secondary Node, SN) change scenario.

Step 2: The UE receives the configuration message, transmitted by the network-side device, of the semi-persistent resource assistance information. When the assistance information reporting function is enabled, if the trigger condition for reporting assistance information is met, the UE determines, based on the following, whether to report the assistance information:
if the assistance information reporting timer is configured on the network side and the assistance information reporting timer is not running (for example, the timer has not been started or timed out), or the assistance information reporting timer is not configured on the network side, the UE transmits the semi-persistent resource assistance information to the network side; and
if the assistance information reporting timer is configured on the network side and the assistance information reporting timer is running, the UE does not transmit the semi-persistent resource assistance information to the network side.

Step 3: The UE determines to transmit the semi-persistent resource assistance information to the network-side device, where the assistance information includes parameter information of one or more periodic data flows. Each periodic data flow includes a combination of one or more of the following information:
identification information of a periodic data flow;
indication information for releasing a periodic data flow; or
parameter information corresponding to a periodic data flow.

The identification information of a periodic data flow may be a combination of one or more of the following information:
a PDU session identifier (PDU session ID);
a QoS flow identifier (QFI);
a data radio bearer identifier (DRB ID);
a logical channel identifier (LCID);
a cell group identifier (MCG ID or SCG ID);
a serving cell identifier (cell ID);
a bandwidth part identifier (BWP ID); or
a semi-persistent scheduling identifier (SPS index).

The indication information for releasing a periodic data flow may be one-bit indication information. For example, a value of " 1" means that the UE requests the network side to release the semi-persistent resource configured for the periodic data flow.

A start time of the periodic data flow in the parameter information corresponding to a periodic data flow may be indicated in any one of the following manners:
indicated by an absolute time based on a system clock, for example, a specific time consisting of hour, minute, and second, where the system clock may be a 5G system clock or an external clock, such as a TSN clock; and
the start time of the periodic data flow is indicated by a specified reference position in a radio system frame structure.

The specified position on the system frame structure may be indicated by a combination of one or more of the following:
a position number, where the position number may be a combination of one or more of a system frame number, a subframe number, a slot number, and an OFDM symbol number;
flipping indication information, where the flipping indication information indicates the number of times of flipping the corresponding number (for example, a system frame number, or a subframe number, or a slot number), and a value of the flipping indication information is any integer; or
indication information of a system frame position at which the semi-persistent resource assistance information is initially transmitted.

A start time of data transmission corresponding to specified periodic data corresponds to a start or end boundary of the reference position determined based on the foregoing information.

A system frame number (System Frame Number, SFN) loop (loop) in which the reference position is located is an SFN loop that is determined based on the system frame number flipping indication with respect to an SFN loop in which the semi-persistent resource assistance information is initially transmitted. (Some communications protocols in the related art stipulate that the SFN uses a value cyclically in [0,1023], which means that if a number corresponding to a current system frame is: SFN=1023, a number corresponding to the next system frame is: SFN=0. Each cycle of obtaining a value of SFN herein is called an SFN loop. Within each SFN loop, a value of SFN falls within [0,1023]. Certainly, the terminology "SFN loop" is merely an example and is not limited thereto).

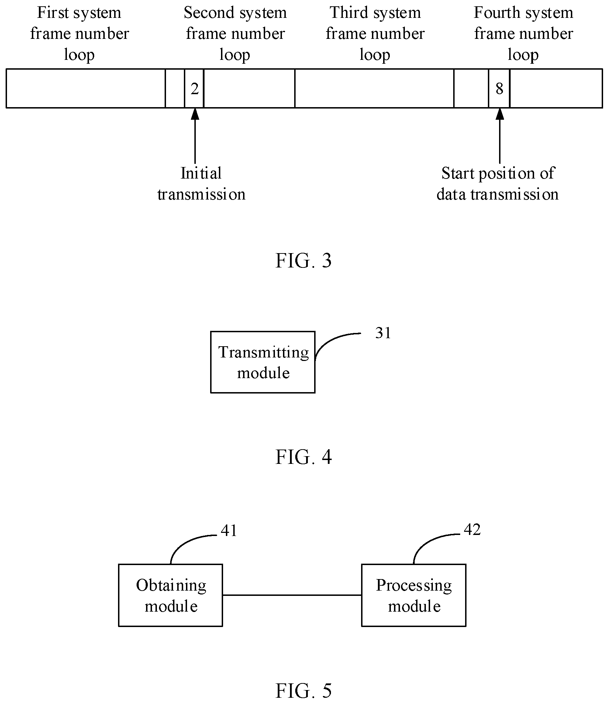

For example, as shown in FIG. 3, it is assumed that the protocols stipulate that a start time of periodic data transmission corresponds to a start boundary of the position number. The UE transmits the semi-persistent resource assistance information in the 2^{nd} (second) SFN loop. A position number indicated in the message is SFN=8, and system frame number flipping indication is 2; then, the network side may determine that the start time of the periodic data transmission is a position corresponding to a start boundary of SFN=8 in the 4^{th} SFN loop. Further, in an example, the UE transmits the semi-persistent resource assistance information in the 2^{nd} SFN loop. A position number indicated in the message is SFN=8, and number flipping indication is -1; then, the network side may determine that the start time of the periodic data transmission is a position corresponding to a start boundary of SFN=8 in the 1^{st} SFN loop.

Further, in an example, it is assumed that the protocols stipulate that a start time of periodic data transmission corresponds to a start boundary of the position number. The UE transmits the semi-persistent resource assistance information in the 2^{nd} SFN loop. A position number indicated in the message is SFN=8, subframe=1, system frame number flipping indication is 2, and subframe number flipping indication is 0; then, the network side may determine that the start time of the periodic data transmission is a position corresponding to a start boundary of SFN=8 and subframe=1 in the 4^{th} SFN loop.

Further, the protocols may prescribe or a network may configure or the UE may determine autonomously that an assistance message is reported only in an SFN loop in which the start time of the periodic data is located. In this case, the reported assistance message may not carry flipping indication of a system frame position number.

The indication information of the system frame position at which the semi-persistent resource assistance information is initially transmitted is used to assist the network side in determining an SFN loop in which the initial transmission is performed (Because there may be retransmission of the assistance message, the UE may perform transmission in the 2^{nd} SFN loop, and the network side receives the message in the 3^{rd} SFN loop). For example, the indication information of the system frame position at which the semi-persistent resource assistance information is initially transmitted may be one-bit indication. If a value is "0", it means that a system frame corresponding to the initial transmission of the reported assistance information falls within [0,511]; or if a value is "1", it means that a system frame corresponding to the initial transmission of the reported assistance information falls within [512,1023]. Assuming that the indication information in the assistance information received by the network is set to "1", and that the system frame number corresponding to the assistance information received by the network side falls within [0,511], the network side may determine that initial transmission of the assistance information reported by the UE is performed in the previous SFN loop; otherwise, the network side may determine that the initial transmission of the assistance information reported by the UE is performed in the current SFN loop. Certainly, the indication information of the system frame position at which the semi-persistent resource assistance information is initially transmitted is not limited to the one-bit indication information, and the number of bits occupied by the indication information may be designed as required.

Further, the network side may configure or the protocols may prescribe or the UE may determine autonomously an occasion of the initial transmission, to prevent the network side from receiving the reported assistance message in the next SFN loop. In this case, the assistance message no longer needs to carry the indication information of the system frame position at which the semi-persistent resource assistance information is initially transmitted.

In addition, if the network side configures a timer for assistance information reporting for the UE, when the UE delivers the semi-persistent resource assistance information to a lower layer, the timer is started; and when the UE receives, from the network side, processing indication for a semi-persistent resource corresponding to the periodic data flow, the timer is stopped.

Step 4: The network-side device receives the semi-persistent resource assistance information reported by the UE, and corresponding processing behaviors are as follows:
for a periodic data flow for which a corresponding semi-persistent resource has been configured and that is requested by the UE for releasing, indicating the UE to release the corresponding semi-persistent resource;
for a periodic data flow for which no semi-persistent resource has been configured, configuring, for the UE, a semi-persistent resource corresponding to the periodic data flow; or
for a periodic data flow for which a semi-persistent resource has been configured previously, reconfiguring or reactivating a semi-persistent resource corresponding to the periodic data flow for the UE according to the semi-persistent resource assistance information.

In this embodiment, when the network side configures and enables the assistance information reporting function for the UE, the UE may determine, based on the reporting condition configured on the network side, whether to report the semi-persistent resource assistance information corresponding to the periodic data flow, so as to assist the network side in reserving an appropriate semi-persistent resource, and to report a timer for assistance information reporting management mechanism, thereby preventing the UE from frequently reporting the assistance information.

An embodiment of this disclosure further provides an apparatus for reporting assistance information, applied to user equipment and, as shown in FIG. 4, including:
a transmitting module 31, configured to report semi-persistent resource assistance information corresponding to a periodic data flow to a network-side device, where the semi-persistent resource assistance information is used by the network-side device to reserve a semi-persistent resource for the periodic data flow.

In this embodiment, the user equipment may report the semi-persistent resource assistance information corresponding to the periodic data flow to the network-side device, so that the network-side device responsible for configuring a semi-persistent resource can obtain the semi-persistent resource assistance information corresponding to the periodic data flow, and can reserve an appropriate semi-persistent resource for the periodic data flow according to the semi-persistent resource assistance information, thereby reducing signaling overheads caused by dynamic scheduling and transmission of the data and ensuring communication reliability of the periodic data flow.

Further, the apparatus further includes:
a judgment module, configured to determine whether a specified reporting condition is met.

The transmitting module is specifically configured to: if a specified reporting condition is met, report the semi-persistent resource assistance information to the network-side device.

Further, the specified reporting condition is determined through a configuration message transmitted by the network-side device, and the apparatus further includes:
a receiving module, configured to receive a configuration message from the network-side device, where the configuration message includes at least one of the following:
a trigger condition for reporting assistance information;
indication information for assistance information reporting; or
a timer for assistance information reporting.

Further, the specified reporting condition is:
the indication information for assistance information reporting indicates reporting assistance information, the trigger condition is met, and the network-side device has configured the timer for semi-persistent resource assistance information reporting but the timer for semi-persistent resource assistance information reporting is not running; or
the indication information for assistance information reporting indicates reporting assistance information, the trigger condition is met, and the network-side device has not configured the timer for semi-persistent resource assistance information reporting.

Further, the transmitting module is further configured to, in a case that the network-side device has configured the timer for semi-persistent resource assistance information reporting and the timer for semi-persistent resource assistance information reporting is running, skip reporting the semi-persistent resource assistance information corresponding to the periodic data flow to the network-side device.

Further, the trigger condition includes at least one of the following:
it is detected that a parameter corresponding to the periodic data flow has changed, where the parameter includes at least one of the following: a transmission periodicity of the periodic data flow, a size of data transmitted in each period, data transmission duration in each period, and a start time of periodic data transmission;
it is detected that the periodic data flow no longer needs to be transmitted through the user equipment;
it is detected that a new periodic data flow needs to be transmitted through the user equipment; or
a preset type of service is to be transmitted or is being transmitted.

Further, the indication information for assistance information reporting is one-bit indication information.

Further, the timer for semi-persistent resource assistance information reporting is set to be N consecutive system frames or subframes or slots or symbols or a preset time length, where N is a positive integer.

Further, the semi-persistent resource assistance information includes semi-persistent resource assistance information corresponding to one or more periodic data flows, and each piece of semi-persistent resource assistance information includes at least one of the following:
identification information of a periodic data flow;
indication information for releasing a periodic data flow; or
parameter information corresponding to a periodic data flow.

Further, the identification information of a periodic data flow includes at least one of the following:
a protocol data unit PDU session identifier;
a quality of service QoS flow identifier;
a data radio bearer identifier;
a logical channel identifier;
a cell group identifier;
a serving cell identifier;
a bandwidth part identifier; or
a semi-persistent scheduling identifier.

Further, the indication information for releasing a periodic data flow is one-bit indication information.

Further, the parameter information corresponding to a periodic data flow includes a start time of the periodic data flow, and the start time is indicated in any one of the following manners:
indicated by an absolute time based on a system clock; or
indicated by a preset reference position on a radio system frame structure, where the start time of the periodic data flow is a start boundary or an end boundary of the preset reference position.

Further, the preset reference position is indicated in at least one of the following manners:
a position number, where the position number is at least one of the following: a system frame number, a subframe number, a slot number, and an orthogonal frequency division multiplexing OFDM symbol number;
flipping indication information, where the flipping indication information indicates the number of times of flipping the position number, and a value of the flipping indication information is any integer; or
indication information of a system frame position at which the semi-persistent resource assistance information is initially transmitted.

Further, the apparatus further includes:
a processing module, configured to: start the timer for semi-persistent resource assistance information reporting, and after a processing indication for a semi-persistent resource corresponding to the periodic data flow is received from the network-side device, stop the timer for semi-persistent resource assistance information reporting.

An embodiment of this disclosure further provides an apparatus for reporting assistance information, applied to a network-side device and, as shown in FIG. 5, including:
an obtaining module 41, configured to obtain semi-persistent resource assistance information corresponding to a periodic data flow and reported by user equipment; and
a processing module 42, configured to reserve a semi-persistent resource for the periodic data flow according to the semi-persistent resource assistance information.

In this embodiment, the user equipment may report the semi-persistent resource assistance information corresponding to the periodic data flow to the network-side device, so that the network-side device responsible for configuring a semi-persistent resource can obtain the semi-persistent resource assistance information corresponding to the periodic data flow, and can reserve an appropriate semi-persistent resource for the periodic data flow according to the semi-persistent resource assistance information, thereby reducing signaling overheads caused by dynamic scheduling and transmission of the data and ensuring communication reliability of the periodic data flow.

Further, the obtaining module is specifically configured to: receive semi-persistent resource assistance information corresponding to a periodic data flow and reported by the user equipment; or
receive the semi-persistent resource assistance information that is corresponding to the periodic data flow, reported by the user equipment, and forwarded by the another network-side device.

Further, the apparatus further includes:
a transmitting module, configured to transmit a configuration message to the user equipment, where the configuration message includes at least one of the following:
a trigger condition for reporting assistance information;
indication information for assistance information reporting; or
a timer for assistance information reporting.

Further, the trigger condition includes at least one of the following:
it is detected that a parameter corresponding to the periodic data flow has changed, where the parameter includes at least one of the following: a transmission periodicity of the periodic data flow, a size of data transmitted in each period, data transmission duration in each period, and a start time of periodic data transmission;
it is detected that the periodic data flow no longer needs to be transmitted through the user equipment;
it is detected that a new periodic data flow needs to be transmitted through the user equipment; or
a preset type of service is to be transmitted or is being transmitted.

Further, the indication information for assistance information reporting is one-bit indication information.

Further, the timer for semi-persistent resource assistance information reporting is set to be N consecutive system frames or subframes or slots or symbols or a preset time length, where N is a positive integer.

Further, the semi-persistent resource assistance information includes semi-persistent resource assistance information corresponding to one or more periodic data flows, and each piece of semi-persistent resource assistance information includes at least one of the following:
identification information of a periodic data flow;
indication information for releasing a periodic data flow; or
parameter information corresponding to a periodic data flow.

Further, the identification information of a periodic data flow includes at least one of the following:
a protocol data unit PDU session identifier;
a quality of service QoS flow identifier;
a data radio bearer identifier;
a logical channel identifier;
a cell group identifier;
a serving cell identifier;
a bandwidth part identifier; or
a semi-persistent scheduling identifier.

Further, the indication information for releasing a periodic data flow is one-bit indication information.

Further, the parameter information corresponding to a periodic data flow includes a start time of the periodic data flow, and the start time is indicated in any one of the following manners:
indicated by an absolute time based on a system clock; or
indicated by a preset reference position on a radio system frame structure, where the start time of the periodic data flow is a start boundary or an end boundary of the preset reference position.

Further, the preset reference position is indicated in at least one of the following manners:
a position number, where the position number is at least one of the following: a system frame number, a subframe number, a slot number, and an orthogonal frequency division multiplexing OFDM symbol number;
flipping indication information, where the flipping indication information indicates the number of times of flipping the position number, and a value of the flipping indication information is any integer; or
indication information of a system frame position at which the semi-persistent resource assistance information is initially transmitted.

Further, the processing module is specifically configured to perform at least one of the following:
in a case that the semi-persistent resource assistance information indicates that the user equipment requests to release a semi-persistent resource corresponding to the periodic data flow, releasing the semi-persistent resource corresponding to the periodic data flow;
for a periodic data flow for which no semi-persistent resource has been configured, configuring a semi-persistent resource corresponding to the periodic data flow for the user equipment; or
for a periodic data flow for which a semi-persistent resource has been configured, reconfiguring or reactivating a semi-persistent resource corresponding to the periodic data flow for the user equipment according to the semi-persistent resource assistance information.

An embodiment of this disclosure further provides a communications device, including a memory, a processor, and a computer program stored in the memory and capable of running on the processor, where when the computer program is executed by the processor, the steps of the foregoing method for reporting assistance information are implemented.

The communications device may be user equipment or a network-side device.

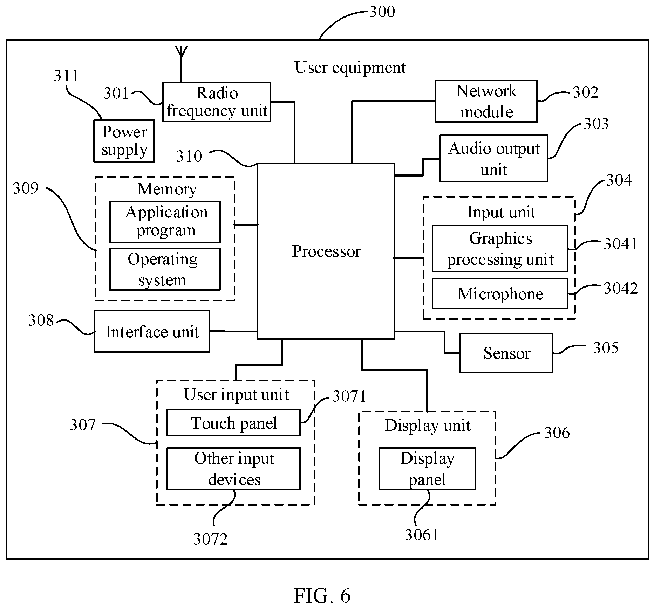

When the communications device is user equipment, as shown in FIG. 6, the user equipment 300 includes but is not limited to components such as a radio frequency unit 301, a network module 302, an audio output unit 303, an input unit 304, a sensor 305, a display unit 306, a user input unit 307, an interface unit 308, a memory 309, a processor 310, and a power supply 311. Persons skilled in the art can understand that the structure of the user equipment shown in FIG. 6 does not constitute any limitation on the user equipment. The user equipment may include more or fewer components than those shown in the figure, or may combine some components, or may have a different component arrangement. In this embodiment of this disclosure, the user equipment includes but is not limited to a mobile phone, a tablet computer, a laptop computer, a palmtop computer, an in-vehicle terminal, a wearable device, a pedometer, and the like.

The processor 310 is configured to report semi-persistent resource assistance information corresponding to a periodic data flow to a network-side device, where the semi-persistent resource assistance information is used by the network-side device to reserve a semi-persistent resource for the periodic data flow

Further, the processor 310 is further configured to determine whether a specified reporting condition is met; and if a specified reporting condition is met, report the semi-persistent resource assistance information to the network-side device.

Further, the specified reporting condition is determined through a configuration message transmitted by the network-side device, and before the reporting semi-persistent resource assistance information corresponding to a periodic data flow to a network-side device, the processor 310 is further configured to receive a configuration message from the network-side device, where the configuration message includes at least one of the following:
a trigger condition for reporting assistance information;
indication information for assistance information reporting; or
a timer for assistance information reporting.

Further, the specified reporting condition is:
the indication information for assistance information reporting indicates reporting assistance information, the trigger condition is met, and the network-side device has configured the timer for semi-persistent resource assistance information reporting but the timer for semi-persistent resource assistance information reporting is not running; or
the indication information for assistance information reporting indicates reporting assistance information, the trigger condition is met, and the network-side device has not configured the timer for semi-persistent resource assistance information reporting.

Further, the processor 310 is further configured to: in a case that the network-side device has configured the timer for semi-persistent resource assistance information reporting and the timer for semi-persistent resource assistance information reporting is running, skip reporting the semi-persistent resource assistance information corresponding to the periodic data flow to the network-side device.

Further, the trigger condition includes at least one of the following:
it is detected that a parameter corresponding to the periodic data flow has changed, where the parameter includes at least one of the following: a transmission periodicity of the periodic data flow, a size of data transmitted in each period, data transmission duration in each period, and a start time of periodic data transmission;
it is detected that the periodic data flow no longer needs to be transmitted through the user equipment;
it is detected that a new periodic data flow needs to be transmitted through the user equipment; or
a preset type of service is to be transmitted or is being transmitted.

Further, the indication information for assistance information reporting is one-bit indication information.

Further, the timer for semi-persistent resource assistance information reporting is set to be N consecutive system frames or subframes or slots or symbols or a preset time length, where N is a positive integer.

Further, the semi-persistent resource assistance information includes semi-persistent resource assistance information corresponding to one or more periodic data flows, and each piece of semi-persistent resource assistance information includes at least one of the following:
identification information of a periodic data flow;
indication information for releasing a periodic data flow; or
parameter information corresponding to a periodic data flow.

Further, the identification information of a periodic data flow includes at least one of the following:
a protocol data unit PDU session identifier;
a quality of service QoS flow identifier;
a data radio bearer identifier;
a logical channel identifier;
a cell group identifier;
a serving cell identifier;
a bandwidth part identifier; or
a semi-persistent scheduling identifier.

Further, the indication information for releasing a periodic data flow is one-bit indication information.

Further, the parameter information corresponding to a periodic data flow includes a start time of the periodic data flow, and the start time is indicated in any one of the following manners:
indicated by an absolute time based on a system clock; or
indicated by a preset reference position on a radio system frame structure, where the start time of the periodic data flow is a start boundary or an end boundary of the preset reference position.

Further, the preset reference position is indicated in at least one of the following manners:
a position number, where the position number is at least one of the following: a system frame number, a subframe number, a slot number, and an orthogonal frequency division multiplexing OFDM symbol number;
flipping indication information, where the flipping indication information indicates the number of times of flipping the position number, and a value of the flipping indication information is any integer; or
indication information of a system frame position at which the semi-persistent resource assistance information is initially transmitted.

Further, after the semi-persistent resource assistance information corresponding to the periodic data flow is reported to the network-side device, the processor 310 is further configured to: start the timer for semi-persistent resource assistance information reporting, and after a processing indication for a semi-persistent resource corresponding to the periodic data flow is received from the network-side device, stop the timer for semi-persistent resource assistance information reporting.

It should be understood that in this embodiment of this disclosure, the radio frequency unit 301 may be configured to: receive and transmit signals in an information receiving/transmitting process or a call process; and specifically, after receiving downlink data from a base station, transmit the downlink data to the processor 310 for processing, and, transmit uplink data to the base station. Generally, the radio frequency unit 301 includes but is not limited to an antenna, at least one amplifier, a transceiver, a coupler, a low noise amplifier, a duplexer, and the like. In addition, the radio frequency unit 301 may further communicate with a network and other devices via a wireless communications system.

The user equipment provides a user with wireless broadband Internet access by using the network module 302, for example, helping the user transmit and receive emails, browse web pages, or access streaming media.

The audio output unit 303 may convert audio data received by the radio frequency unit 301 or the network module 302 or stored in the memory 309 into an audio signal and output the audio signal as a sound. Moreover, the audio output unit 303 may also provide an audio output (for example, a call signal reception sound or a message reception sound) related to a specific function performed by the user equipment 300. The audio output unit 303 includes a speaker, a buzzer, a receiver, and the like.

The input unit 304 is configured to receive an audio or video signal. The input unit 304 may include a graphics processing unit (Graphics Processing Unit, GPU) 3041 and a microphone 3042, and the graphics processing unit 3041 processes image data of a still picture or a video obtained by an image capture apparatus (for example, a camera) in an image capture mode or a video capture mode. A processed image frame may be displayed on the display unit 306. An image frame processed by the graphics processing unit 3041 may be stored in the memory 309 (or another storage medium) or transmitted by the radio frequency unit 301 or the network module 302. The microphone 3042 is capable of receiving sounds and processing such sounds into audio data. The processed audio data can be converted into a format output that can be transmitted to a mobile communication base station by using the radio frequency unit 301 in a telephone call mode.

The user equipment 300 further includes at least one sensor 305, for example, an optical sensor, a motion sensor, and other sensors. Specifically, the optical sensor includes an ambient light sensor and a proximity sensor. The ambient light sensor may adjust luminance of the display panel 3031 based on brightness of ambient light. The proximity sensor may turn off the display panel 3031 and/or backlight when the user equipment 300 approaches an ear. As a type of motion sensor, an accelerometer sensor may detect accelerations in various directions (usually, three axes), may detect, in a still state, a magnitude and a direction of gravity, and may be configured to recognize a posture (for example, screen switching between landscape and portrait, related games, and magnetometer posture calibration) of user equipment, implement a vibration recognition related function (for example, pedometer or tapping), and the like. The sensor 305 may further include a fingerprint sensor, a pressure sensor, an iris sensor, a molecular sensor, a gyroscope, a barometer, a hygrometer, a thermometer, an infrared sensor, or the like. Details are not described herein.

The display unit 306 is configured to display information input by the user or information provided to the user. The display unit 306 may include the display panel 3031. Optionally, the display panel 3031 may be configured in a form of a liquid crystal display (Liquid Crystal Display, LCD), an organic light-emitting diode (Organic Light-Emitting Diode, OLED), or the like.

The user input unit 307 may be configured to receive entered digit or character information, and generate a key signal input related to a user setting and function control of the user equipment. Specifically, the user input unit 307 includes a touch panel 3071 and other input devices 3072. The touch panel 3071, also referred to as a touchscreen, may capture a touch operation performed by a user on or near the touch panel (for example, an operation performed by the user on the touch panel 3071 or near the touch panel 3071 by using any appropriate object or accessory such as a finger or a stylus). The touch panel 3071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into touch point coordinates, transmits the touch point coordinates to the processor 310, and receives and executes a command transmitted by the processor 310. In addition, the touch panel 3071 may be implemented in a plurality of forms, for example, as a resistive, capacitive, infrared, or surface acoustic wave touch panel. In addition to the touch panel 3071, the user input unit 307 may further include other input devices 3072. Specifically, the other input devices 3072 may include but are not limited to a physical keyboard, a function key (for example, a volume control key or a power on/off key), a trackball, a mouse, and a joystick. Details are not described herein.

Further, the touch panel 3071 may cover the display panel 3031. When detecting a touch operation on or near the touch panel 3071, the touch panel 3071 transmits the touch operation to the processor 310 for determining a type of the touch event. Then, the processor 310 provides a corresponding visual output on the display panel 3031 based on the type of the touch event. In FIG. 6, the touch panel 3071 and the display panel 3031 are used as two independent parts to implement input and output functions of the user equipment. In some embodiments, however, the touch panel 3071 and the display panel 3031 may be integrated to implement the input and output functions of the user equipment. Details are not limited herein.

The interface unit 308 is an interface between the external apparatus and the user equipment 300. For example, the external apparatus may include a wired or wireless headphone port, an external power supply (or battery charger) port, a wired or wireless data port, a memory card port, a port for connecting an apparatus with an identification module, an audio input/output (input/output, I/O) port, a video I/O port, a headset port, or the like. The interface unit 308 may be configured to receive an input (for example, data information or power) from the external apparatus and transmit the received input to one or more elements of the user equipment 300, or transmit data between the external apparatus and the user equipment 300.

The memory 309 may be configured to store software programs and various data. The memory 309 may mainly include a program storage area and a data storage area. The program storage area may store an operating system, an application program required for at least one function (for example, a sound play function and an image play function), and the like. The data storage area may store data created based on use of the mobile phone (for example, audio data and a phone book), and the like. In addition, the memory 309 may include a high-speed random access memory, and may further include a non-volatile memory such as at least one disk storage device, a flash memory device, or other volatile solid-state storage devices.

The processor 310, as a control center of the user equipment, is connected to all parts of the entire user equipment by using various interfaces and lines. By running or executing a software program and/or module that is stored in the memory 309 and invoking data stored in the memory 309, the processor 310 executes various functions of the user equipment and processes data, so as to perform overall monitoring on the user equipment. The processor 310 may include one or more processing units. Optionally, the processor 310 may integrate an application processor and a modem processor. The application processor mainly processes an operating system, a user interface, an application program, and the like. The modem processor mainly processes wireless communication. It can be understood that the modem processor may alternatively be not integrated in the processor 310.

The user equipment 300 further includes the power supply 311 (such as a battery) for supplying power to the components. Optionally, the power supply 311 may be logically connected to the processor 310 through a power management system. In this way, functions such as charge management, discharge management, and power consumption management are implemented by using the power management system.

In addition, the user equipment 300 includes some functional modules not shown. Details are not described herein.

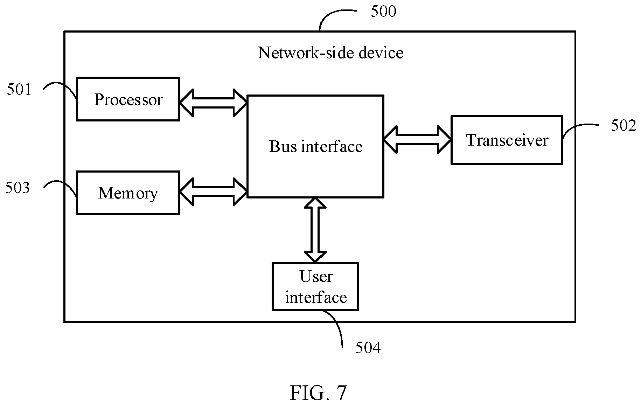

When the communications device is a network-side device, as shown in FIG. 7, the network-side device 500 includes a processor 501, a transceiver 502, a memory 503, a user interface 504, and a bus interface.

In this embodiment of this disclosure, the network-side device 500 further includes a computer program stored in the memory 503 and capable of running on the processor 501. When the computer program is executed by the processor 501, the following steps are implemented: obtaining the semi-persistent resource assistance information corresponding to the periodic data flow and reported by the user equipment; and reserving a semi-persistent resource for the periodic data flow according to the semi-persistent resource assistance information.

In FIG. 7, a bus architecture may include any quantity of interconnected buses and bridges, and specifically connect together various circuits of one or more processors represented by the processor 501 and a memory represented by the memory 503. The bus architecture may further interconnect various other circuits such as a peripheral device, a voltage regulator, and a power management circuit. These are all common sense in the art, and therefore are not further described in this specification. The bus interface provides interfaces. The transceiver 502 may be a plurality of components, including a transmitter and a receiver, and provides units for communicating with a variety of other apparatuses on a transmission medium. For different user equipment, the user interface 504 may also be an interface capable of externally or internally connecting a required device, and the connected device includes but is not limited to a keypad, a display, a speaker, a microphone, a joystick, and the like.

The processor 501 is responsible for management of the bus architecture and general processing, and the memory 503 may store data for use by the processor 501 when the processor 501 performs an operation.

Further, when the computer program is executed by the processor 501, the following steps are implemented: receiving the semi-persistent resource assistance information corresponding to the periodic data flow and reported by the user equipment; or
receiving the semi-persistent resource assistance information that is corresponding to the periodic data flow, reported by the user equipment, and forwarded by the another network-side device.

Further, when the computer program is executed by the processor 501, the following step is implemented:
transmitting a configuration message to the user equipment, where the configuration message includes at least one of the following:
a trigger condition for reporting assistance information;
indication information for assistance information reporting; or
a timer for assistance information reporting.

Further, the trigger condition includes at least one of the following:
it is detected that a parameter corresponding to the periodic data flow has changed, where the parameter includes at least one of the following: a transmission periodicity of the periodic data flow, a size of data transmitted in each period, data transmission duration in each period, and a start time of periodic data transmission;
it is detected that the periodic data flow no longer needs to be transmitted through the user equipment;
it is detected that a new periodic data flow needs to be transmitted through the user equipment; or
a preset type of service is to be transmitted or is being transmitted.

Further, the indication information for assistance information reporting is one-bit indication information.

Further, the timer for semi-persistent resource assistance information reporting is set to be N consecutive system frames or subframes or slots or symbols or a preset time length, where N is a positive integer.

Further, the semi-persistent resource assistance information includes semi-persistent resource assistance information corresponding to one or more periodic data flows, and each piece of semi-persistent resource assistance information includes at least one of the following:
identification information of a periodic data flow;
indication information for releasing a periodic data flow; or
parameter information corresponding to a periodic data flow.

Further, the identification information of a periodic data flow includes at least one of the following:
a protocol data unit PDU session identifier;
a quality of service QoS flow identifier;
a data radio bearer identifier;
a logical channel identifier;
a cell group identifier;
a serving cell identifier;
a bandwidth part identifier; or
a semi-persistent scheduling identifier.

Further, the indication information for releasing a periodic data flow is one-bit indication information.

Further, the parameter information corresponding to a periodic data flow includes a start time of the periodic data flow, and the start time is indicated in any one of the following manners:
indicated by an absolute time based on a system clock; or
indicated by a preset reference position on a radio system frame structure, where the start time of the periodic data flow is a start boundary or an end boundary of the preset reference position.

Further, the preset reference position is indicated in at least one of the following manners:
a position number, where the position number is at least one of the following: a system frame number, a subframe number, a slot number, and an orthogonal frequency division multiplexing OFDM symbol number;
flipping indication information, where the flipping indication information indicates the number of times of flipping the position number, and a value of the flipping indication information is any integer; or
indication information of a system frame position at which the semi-persistent resource assistance information is initially transmitted.

Further, when the computer program is executed by the processor 501, at least one of the following steps are implemented: in a case that the semi-persistent resource assistance information indicates that the user equipment requests to release a semi-persistent resource corresponding to the periodic data flow, releasing the semi-persistent resource corresponding to the periodic data flow;
for a periodic data flow for which no semi-persistent resource has been configured, configuring a semi-persistent resource corresponding to the periodic data flow for the user equipment; or
for a periodic data flow for which a semi-persistent resource has been configured, reconfiguring or reactivating a semi-persistent resource corresponding to the periodic data flow for the user equipment according to the semi-persistent resource assistance information.

An embodiment of this disclosure further provides a computer-readable storage medium, where the computer-readable storage medium stores a computer program, and when the computer program is executed by a processor, the steps of the foregoing method for reporting assistance information are implemented.

It should be noted that, it should be understood that division of the modules is merely logical function division. Some or all of the modules may be integrated in a physical entity or may be separated physically in an actual implementation. In addition, the modules may be all implemented in a form of software invoked by a processing component, or may be all implemented in a form of hardware; or some of the modules may be implemented in a form of software invoked by a processing component, and some of the modules may be implemented in a form of hardware. For example, a determining module may be a processing component that is separately disposed, or may be integrated in a chip of the apparatus for implementation. In addition, the determining module may be stored in the memory of the apparatus in a form of program code, and is invoked by a processing component of the apparatus to perform a function of the determining module. Implementation of other modules is similar to this. In addition, all or some of the modules may be integrated, or may be implemented independently. Herein, the processing component may be an integrated circuit, and has a signal processing capability. In an implementation process, the steps in the foregoing method or the foregoing modules may be implemented by using an integrated logic circuit of hardware of the processor component or by using instructions in a form of software.

For example, the modules above may be one or more integrated circuits configured to implement the foregoing method, for example, one or more application-specific integrated circuits (Application Specific Integrated Circuit, ASIC), or one or more microprocessors (digital signal processor, DSP), or one or more field programmable gate arrays (Field Programmable Gate Array, FPGA). For another example, when one of the foregoing modules is implemented in a form of program code invoked by a processing component, the processing component may be a general-purpose processor, for example, a central processing unit (Central Processing Unit, CPU) or another processor that may invoke program code. For another example, the modules may be integrated in a form of a system-on-a-chip (system-on-a-chip, SOC) for implementation. It can be understood that the embodiments described in this specification may be implemented by hardware, software, firmware, middleware, microcode, or a combination thereof. For hardware implementation, the processing unit may be implemented in one or more application-specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for performing the functions described in this application, or a combination thereof.

For software implementation, the technology described herein may be implemented by executing modules (for example, procedures and functions) of the functions described herein. Software code may be stored in the memory and executed by the processor. The memory may be implemented inside or outside the processor.

All embodiments in this specification are described in a progressive manner. Each embodiment focuses on differences from other embodiments. For the part that is the same or similar between different embodiments, reference may be made between the embodiments.

Persons skilled in the art should understand that the embodiments of this disclosure may be provided as a method, an apparatus, or a computer program product. Therefore, the embodiments of this disclosure may be hardware-only embodiments, software-only embodiments, or embodiments with a combination of software and hardware. Moreover, the embodiments of this disclosure may be implemented in the form of one or more computer program products implemented on a computer-usable storage medium (including but not limited to a disk memory, a compact disc read-only memory (Compact Disc Read-Only Memory, CD-ROM) driver, an optical memory, and the like) that includes computer-usable program code.

The embodiments of this disclosure are described with reference to the flowcharts and/or block diagrams of the method, the user equipment (system), and the computer program product according to the embodiments of this disclosure. It should be understood that computer program instructions may be used to implement each process and/or each block in the flowcharts and/or the block diagrams, or a combination of a process and/or a block in the flowcharts and/or the block diagrams. These computer program instructions may be provided to a general-purpose computer, a special-purpose computer, an embedded processor, or a processor of any other programmable data processing user equipment to generate a machine, so that the instructions executed by a computer or a processor of any other programmable data processing user equipment generate an apparatus for implementing a specific function in one or more processes in the flowcharts and/or in one or more blocks in the block diagrams.

These computer program instructions may also be stored in a computer-readable memory that can direct the computer or any other programmable data processing user equipment to work in a specific manner, so that the instructions stored in the computer-readable memory produce an artifact that includes an instruction apparatus. The instruction apparatus implements a specific function in one or more processes in the flowcharts and/or in one or more blocks in the block diagrams.

These computer program instructions may be loaded onto a computer or other programmable data processing user equipment, so that a series of operations and steps are performed on the computer or the other programmable user equipment, thereby generating computer-implemented processing. Therefore, the instructions executed on the computer or the other programmable user equipment provide steps for implementing the functions specified in one or more processes in the flowcharts and/or in one or more blocks in the block diagrams.

Although some optional embodiments in the embodiments of this disclosure have been described, persons skilled in the art can make changes and modifications to these embodiments once they learn the basic inventive concept. Therefore, the following claims are intended to be construed as to cover the optional embodiments and all changes and modifications falling within the scope of the embodiments of this disclosure.

It should be further noted that in this specification, relational terms such as "first" and "second" are only used to distinguish one entity or operation from another, and do not necessarily require or imply that any actual relationship or sequence exists between these entities or operations. Moreover, the terms "include", "comprise", or any of their variants are intended to cover a non-exclusive inclusion, such that a process, a method, an article, or user equipment that includes a list of elements not only includes those elements but also includes other elements that are not expressly listed, or further includes elements inherent to such a process, method, article, or user equipment. In absence of more constraints, an element preceded by "includes a..." does not preclude the existence of other identical elements in the process, method, article, or user equipment that includes the element.

The foregoing descriptions are merely optional implementations of this disclosure. It should be noted that a person of ordinary skill in the art may make several improvements or polishing without departing from the principle of this disclosure and the improvements and polishing shall fall within the protection scope of this disclosure.

## Claims

1. A method for reporting assistance information, applied to user equipment and comprising:
reporting semi-persistent resource assistance information corresponding to a periodic data flow to a network-side device, wherein the semi-persistent resource assistance information is used by the network-side device to reserve a semi-persistent resource for the periodic data flow.

2. The method for reporting assistance information according to claim 1, wherein the reporting semi-persistent resource assistance information corresponding to a periodic data flow to a network-side device comprises:
if a specified reporting condition is met, reporting the semi-persistent resource assistance information to the network-side device.

3. The method for reporting assistance information according to claim 1 or 2, wherein before the reporting semi-persistent resource assistance information corresponding to a periodic data flow to a network-side device, the method further comprises:
receiving a configuration message from the network-side device, wherein the configuration message comprises at least one of the following:
a trigger condition for reporting assistance information;
indication information for assistance information reporting; or
a timer for assistance information reporting.

4. The method for reporting assistance information according to claim 3, wherein the specified reporting condition is:
the indication information for assistance information reporting indicates reporting assistance information, the trigger condition is met, and the network-side device has configured the timer for semi-persistent resource assistance information reporting but the timer for semi-persistent resource assistance information reporting is not running; or
the indication information for assistance information reporting indicates reporting assistance information, the trigger condition is met, and the network-side device has not configured the timer for semi-persistent resource assistance information reporting.

5. The method for reporting assistance information according to claim 3, further comprising:
in a case that the network-side device has configured the timer for semi-persistent resource assistance information reporting and the timer for semi-persistent resource assistance information reporting is running, skipping reporting the semi-persistent resource assistance information corresponding to the periodic data flow to the network-side device.

6. The method for reporting assistance information according to claim 3, wherein the trigger condition comprises at least one of the following:
a parameter corresponding to the periodic data flow has changed, wherein the parameter comprises at least one of the following: a transmission periodicity of the periodic data flow, a size of data transmitted in each period, data transmission duration in each period, and a start time of periodic data transmission;
the periodic data flow no longer needs to be transmitted through the user equipment;
a new periodic data flow needs to be transmitted through the user equipment; or
a preset type of service is to be transmitted or is being transmitted.

7. The method for reporting assistance information according to claim 1, wherein the semi-persistent resource assistance information comprises semi-persistent resource assistance information corresponding to one or more periodic data flows, and each piece of semi-persistent resource assistance information comprises at least one of the following:
identification information of a periodic data flow;
indication information for releasing a periodic data flow; or
parameter information corresponding to a periodic data flow.

8. The method for reporting assistance information according to claim 7, wherein the identification information of a periodic data flow comprises at least one of the following:
a protocol data unit PDU session identifier;
a quality of service QoS flow identifier;
a data radio bearer identifier;
a logical channel identifier;
a cell group identifier;
a serving cell identifier;
a bandwidth part identifier; or
a semi-persistent scheduling identifier.

9. The method for reporting assistance information according to claim 7, wherein the parameter information corresponding to a periodic data flow comprises a start time of the periodic data flow, and the start time is indicated in any one of the following manners:
indicated by an absolute time based on a system clock; or
indicated by a preset reference position on a radio system frame structure, wherein the start time of the periodic data flow is a start boundary or an end boundary of the preset reference position.

10. The method for reporting assistance information according to claim 9, wherein the preset reference position is indicated in at least one of the following manners:
a position number, wherein the position number is at least one of the following: a system frame number, a subframe number, a slot number, and an orthogonal frequency division multiplexing OFDM symbol number;
flipping indication information, wherein the flipping indication information indicates the number of times of flipping the position number, and a value of the flipping indication information is any integer; or
indication information of a system frame position at which the semi-persistent resource assistance information is initially transmitted.

11. The method for reporting assistance information according to claim 3, wherein after the reporting semi-persistent resource assistance information corresponding to a periodic data flow to a network-side device, the method further comprises:
starting the timer for semi-persistent resource assistance information reporting; and
after a processing indication for a semi-persistent resource corresponding to the periodic data flow is received from the network-side device, stopping the timer for semi-persistent resource assistance information reporting.

12. A method for reporting assistance information, applied to a network-side device and comprising:
obtaining semi-persistent resource assistance information corresponding to a periodic data flow and reported by user equipment; and
reserving a semi-persistent resource for the periodic data flow according to the semi-persistent resource assistance information.

13. The method for reporting assistance information according to claim 12, further comprising:
transmitting a configuration message to the user equipment, wherein the configuration message comprises at least one of the following:
a trigger condition for reporting assistance information;
indication information for assistance information reporting; or
a timer for assistance information reporting.

14. The method for reporting assistance information according to claim 13, wherein the trigger condition comprises at least one of the following:
a parameter corresponding to the periodic data flow has changed, wherein the parameter comprises at least one of the following: a transmission periodicity of the periodic data flow, a size of data transmitted in each period, data transmission duration in each period, and a start time of periodic data transmission;
the periodic data flow no longer needs to be transmitted through the user equipment;
a new periodic data flow needs to be transmitted through the user equipment; or
a preset type of service is to be transmitted or is being transmitted.

15. The method for reporting assistance information according to claim 12, wherein the semi-persistent resource assistance information comprises semi-persistent resource assistance information corresponding to one or more periodic data flows, and each piece of semi-persistent resource assistance information comprises at least one of the following:
identification information of a periodic data flow;
indication information for releasing a periodic data flow; or
parameter information corresponding to a periodic data flow.

16. The method for reporting assistance information according to claim 15, wherein the identification information of a periodic data flow comprises at least one of the following:
a protocol data unit PDU session identifier;
a quality of service QoS flow identifier;
a data radio bearer identifier;
a logical channel identifier;
a cell group identifier;
a serving cell identifier;
a bandwidth part identifier; or
a semi-persistent scheduling identifier.

17. The method for reporting assistance information according to claim 15, wherein the parameter information corresponding to a periodic data flow comprises a start time of the periodic data flow, and the start time is indicated in any one of the following manners:
indicated by an absolute time based on a system clock; or
indicated by a preset reference position on a radio system frame structure, wherein the start time of the periodic data flow is a start boundary or an end boundary of the preset reference position.

18. The method for reporting assistance information according to claim 17, wherein the preset reference position is indicated in at least one of the following manners:
a position number, wherein the position number is at least one of the following: a system frame number, a subframe number, a slot number, and an orthogonal frequency division multiplexing OFDM symbol number;
flipping indication information, wherein the flipping indication information indicates the number of times of flipping the position number, and a value of the flipping indication information is any integer; or
indication information of a system frame position at which the semi-persistent resource assistance information is initially transmitted.

19. The method for reporting assistance information according to claim 12, wherein the reserving a semi-persistent resource for the periodic data flow according to the semi-persistent resource assistance information comprises at least one of the following:
in a case that the semi-persistent resource assistance information indicates that the user equipment requests to release a semi-persistent resource corresponding to the periodic data flow, releasing the semi-persistent resource corresponding to the periodic data flow;
for a periodic data flow for which no semi-persistent resource has been configured, configuring a semi-persistent resource corresponding to the periodic data flow for the user equipment; or
for a periodic data flow for which a semi-persistent resource has been configured, reconfiguring or reactivating a semi-persistent resource corresponding to the periodic data flow for the user equipment according to the semi-persistent resource assistance information.

20. An apparatus for reporting assistance information, applied to user equipment and comprising:
a transmitting module, configured to report semi-persistent resource assistance information corresponding to a periodic data flow to a network-side device, wherein the semi-persistent resource assistance information is used by the network-side device to reserve a semi-persistent resource for the periodic data flow.

21. The apparatus for reporting assistance information according to claim 20, wherein
the transmitting module is specifically configured to: if a specified reporting condition is met, report the semi-persistent resource assistance information to the network-side device.

22. The apparatus for reporting assistance information according to claim 20 or 21, further comprising:
a receiving module, configured to receive a configuration message from the network-side device, wherein the configuration message comprises at least one of the following:
a trigger condition for reporting assistance information;
indication information for assistance information reporting; or
a timer for assistance information reporting.

23. The apparatus for reporting assistance information according to claim 21, further comprising:
a processing module, configured to: start the timer for semi-persistent resource assistance information reporting, and after a processing indication for a semi-persistent resource corresponding to the periodic data flow is received from the network-side device, stop the timer for semi-persistent resource assistance information reporting.

24. An apparatus for reporting assistance information, applied to a network-side device and comprising:
an obtaining module, configured to obtain semi-persistent resource assistance information corresponding to a periodic data flow and reported by user equipment; and
a processing module, configured to reserve a semi-persistent resource for the periodic data flow according to the semi-persistent resource assistance information.

25. The apparatus for reporting assistance information according to claim 24, further comprising:
a transmitting module, configured to transmit a configuration message to the user equipment, wherein the configuration message comprises at least one of the following:
a trigger condition for reporting assistance information;
indication information for assistance information reporting; or
a timer for assistance information reporting.

26. The apparatus for reporting assistance information according to claim 24, wherein the processing module is configured to perform at least one of the following:
in a case that the semi-persistent resource assistance information indicates that the user equipment requests to release a semi-persistent resource corresponding to the periodic data flow, releasing the semi-persistent resource corresponding to the periodic data flow;
for a periodic data flow for which no semi-persistent resource has been configured, configuring a semi-persistent resource corresponding to the periodic data flow for the user equipment; or
for a periodic data flow for which a semi-persistent resource has been configured, reconfiguring or reactivating a semi-persistent resource corresponding to the periodic data flow for the user equipment according to the semi-persistent resource assistance information.

27. A communications device, comprising a memory, a processor, and a computer program stored in the memory and capable of running on the processor, wherein when the computer program is executed by the processor, the steps of the method for reporting assistance information according to any one of claims 1 to 11 are implemented, or the steps of the method for reporting assistance information according to any one of claims 12 to 19 are implemented.

28. A computer-readable storage medium, wherein the computer-readable storage medium stores a computer program, and when the computer program is executed by a processor, the steps of the method for reporting assistance information according to any one of claims 1 to 11 are implemented, or the steps of the method for reporting assistance information according to any one of claims 12 to 19 are implemented.
